# EUROPEAN PATENT APPLICATION

(11) **EP 4 345 229 A1**
(43) Date of publication of application: **03.04.2024**
(21) Application number: 23382975.3
(22) Date of filing: 26.09.2023
(51) Int. Cl.: E04H 12/12, E02D 27/42, E04H 12/34, E04H 12/16, F03D 13/20

(54) **CONCRETE SEGMENT OF A SECTION OF A WIND TURBINE TOWER AND A MOULD CONFIGURED TO CAST A CONCRETE SEGMENT**

(30) Priority: 26.09.2022 EP 22382883
(71) Applicant: Nordex Energy Spain, S.A.U., 31395 Barasoain (Navarra) (ES)
(72) Inventor: Garduño, Aitor, Barasoain (ES); García Maestre, Iván, Barasoain (ES)
(74) Representative: Pons

(57) **Abstract**

The object of the invention is a concrete segment of a section of a wind turbine tower which minimizes the undesirable local effects in the connection area between adjacent concrete sections, a section comprising at least two concrete segments, a set comprising two adjacent sections and a joint disposed between the two adjacent sections, a tower comprising at least one set and a mould configured to cast a concrete segment.

## Description

### OBJECT OF THE INVENTION

The object of the invention is a concrete segment of a section of a wind turbine tower which minimizes the undesirable local effects in the connection area between adjacent concrete sections.

The invention also relates to a section comprising at least two concrete segments, a set comprising two adjacent sections and a joint disposed between the two adjacent sections, a tower comprising at least one set and a mould configured to cast a concrete segment.

### BACKGROUND OF THE INVENTION

The wind turbines comprise a tower, a nacelle which houses the electrical generator and a rotor formed in turn by at least two blades. The tower of the wind turbine supports the nacelle and the rotor. Large wind turbines have steel, lattice, or reinforced concrete towers or even mixed-type towers, the latter comprising sections of different materials, for example, a lower section of concrete and an upper section of steel or lattice.

Due to the height of the wind turbines, the tower has to be divided into several annular sections which are stacked during the wind turbine assembly stage thus forming the full height of the tower. Dividing the tower into sections has the advantage that each section has a size such that its transport by road or rail is easier.

One of the most commonly used materials for large towers is concrete, since it involves competitive costs and performance compared to those for the production of steel towers of similar characteristics. However, the weight of each concrete tower section can easily exceed one hundred tons, this fact being infrequent for metal tower sections, so stacking the concrete sections requires heavy-tonnage lifting and positioning means. The cost of using such lifting and positioning means, which may be for example a crane, is directly related to the tonnage and height that it is capable of handling and the time of use thereof. This high-tonnage crane is also used for lifting and positioning the nacelle, as the weight of the nacelle may also exceed 100 tons.

The design of wind turbine components and the design of the connections between them once placed, should take into account the loads they will have to bear throughout their useful life to ensure the proper functioning thereof. In particular, the connections between different concrete sections of the tower are adapted to withstand the loads they will have to bear throughout their useful life, such as gravitational loads, assembly loads, inertial loads, aerodynamic loads, operational loads and other loads that depend on the location where the wind turbine is to be installed, such as earthquakes.

Currently, some wind turbine towers with concrete segments include a geometry of the connection area between adjacent concrete sections which comprises an inward thickness increase towards the inside of the tower with respect to the wall thickness in a central part of each concrete section of the tower. This inward thickness increase towards the inside of the tower is necessary for providing a wider contact area for the concrete-grout (or concrete-resin) interfaces in the horizontal joint between adjacent sections so that the stresses can be stood by the filler material (grout or resin) used in the horizontal joints, allowing for some manufacturing or pouring deficiencies of such filler material.

However, this state-of-the-art geometry gives rise to undesirable local effects in the concrete segments, such as:
- Local bending moments in transition region from the central part and the connection area of the concrete segment that increase concrete compressive stresses and that require additional reinforcement for tensile forces at the beginning of the connection area; and
- Circumferential compressive and tensile stresses close to thickness changes.

The present invention solves the problems described above by providing a concrete segment of a section of a wind turbine tower which minimizes the undesirable local effects in the connection area between adjacent concrete sections.

### DESCRIPTION OF THE INVENTION

The invention relates to a concrete segment of a section of a wind turbine tower, the concrete segment comprising:
- a central area comprising an inner surface, an outer surface and a central surface located at the same distance from the inner surface as from the outer surface, a lower part and an upper part, wherein the central area further comprises a first wall thickness defined as the distance between the inner surface and the outer surface; and
- at least one connection area comprising a horizontal connection flange, wherein the at least one connection area is configured to be connected, in use, to an adjacent connection area of an adjacent concrete segment, the adjacent connection area comprising an adjacent horizontal connection flange, by means of the horizontal connection flange.

Optionally, the first wall thickness in the lower part of the central area is smaller than the first wall thickness in the upper part of the central area.

Optionally, the first wall thickness increases from the lower part to the upper part of the central area of the concrete segment.

This is particularly beneficial, although not limited, to hybrid concrete-steel towers, where one or more steel sections are arranged on top of an upper concrete section, preferably beneficial the configuration of the present invention for the upper concrete sections, so as to improve the transmission of stresses from the steel sections to the concrete section or sections. In this sense, the use of the concrete segment of the present invention to full concrete towers is also possible.

Also, the amount of concrete used is optimised as the dimensions of the segment are adjusted to what is really needed, since the thickness varies within the same segment. So, it is possible to adjust the thickness of the segment depending on the weights, loads, fatigue stresses intended to be supported by the segments.

Optionally, the at least one connection area comprises a second wall thickness being bigger than the first wall thickness.

Optionally, the second wall thickness of the at least one connection area further comprises an inward thickness increase with respect to the first wall thickness.

Optionally, the second wall thickness of the at least one connection area further comprises an outward thickness increase with respect to the first wall thickness.

Optionally, the at least one connection area is a lower connection area comprising a horizontal connection flange, wherein the lower connection area is configured to be connected, in use, to an adjacent connection area of a lower concrete segment, the adjacent connection area comprising an adjacent horizontal connection flange, by means of the horizontal connection flange, wherein the horizontal connection flange of the lower connection area comprises a wall thickness being smaller than the first wall thickness of the central area of the concrete segment.

Optionally, the first wall thickness at the upper part of the central area is greater than 100% and lower than 200% of the first wall thickness at the lower part of the central area.

Optionally, the first wall thickness at the upper part of the central area is greater than 125% and lower than 175% of the first wall thickness at the lower part of the central area.

Optionally, the first wall thickness at the upper part of the central area is greater than 140% and lower than 160% of the first wall thickness at the lower part of the central area.

Optionally, the first wall thickness increases in a uniform way from the lower part to the upper part of the central area of the concrete segment.

Optionally, the first wall thickness increases in a non-uniform way from the lower part to the upper part of the central area of the concrete segment.

Optionally, the inner surface of the central area comprises at least one first conicity and the outer surface of the central area comprises at least one first conicity, wherein the first conicity of the inner surface is greater, at least partially, than the first conicity of the outer surface.

Optionally, the inner surface of the central area comprises at least one first conicity and the outer surface of the central area comprises at least one first conicity, wherein the first conicity of the inner surface is smaller, at least partially, than the first conicity of the outer surface.

Optionally, the inner surface of the central area comprises at least one first conicity and the outer surface of the central area comprises at least one first conicity, wherein the first conicity of the inner surface is equal, at least partially, to the first conicity of the outer surface.

Optionally, the inner surface of the central area comprises at least one second conicity and/or the outer surface of the central area comprises at least one second conicity, wherein the second conicity of the inner surface and/or the second conicity of the outer surface are/is equal, smaller or greater, at least partially, than the second conicity of the outer surface and/or the second conicity of the inner surface, respectively, or equal, smaller or greater, at least partially, than the first conicity of the outer surface and/or the first conicity of the inner surface.

Optionally, the at least one connection area is located in an upper end and/or in a lower end of the segment.

Optionally, the concrete segment comprises an upper end and a lower end, wherein the thickness increases, at least partially, from the lower end to the upper end.

The invention also relates to a section comprising at least two concrete segments as described above.

The invention also relates to a tower comprising at least two sections as described above.

Optionally, the tower comprises at least two adjacent sections being an upper section and a lower section, and a substantially horizontal joint disposed between the two adjacent sections, wherein the first wall thickness of the at least two concrete segments of the lower section is smaller than the first wall thickness of the at least two concrete segments of the upper section.

The invention also relates to a wind turbine comprising the tower described above.

The invention also relates to a mould configured to cast a concrete segment as described above, wherein the mould comprises at least a base, a counter-mould and two lateral sides,
wherein the base comprises:
- a central surface comprising an exterior diameter, and a first end and a second end; and

- at least one connection surface disposed adjacent to one lateral side; and wherein the counter-mould comprises
   - a central surface comprising an interior diameter, and a first end and a second end opposite to the first end and the second end of the central surface of the base, respectively; and
   - at least one connection surface disposed adjacent to the one lateral side,
   wherein the difference between the exterior diameter of the central surface of the base and the interior diameter of the central surface of the counter-mould increases from the first ends the second ends.

Optionally, the at least one connection surface of the base comprises an exterior diameter greater than exterior diameter of the central surface.

The expression "inward thickness increase" means inward thickness increase towards the inside of the wind turbine tower, when in use, the concrete segment is disposed in the tower.

The expression "outward thickness increase" means outward thickness increase towards the outside of the wind turbine tower, when in use, the concrete segment is disposed in the tower.

The expression "central surface" is an interior surface of the concrete segment, being non-accessible, i.e., it is a virtual central surface of the concrete segment.

Preferably, in use, the central surface is coincident with a load path intended to be transmitted along the central area.

In this way, the concrete segment so configured provides the following structural improvements:
- The local bending is avoided, reducing drastically fatigue damage in concrete and avoiding additional local reinforcements;
- Circumferential stresses are minimized; and
- Local effects and stresses concentrations in a transition region from the central area to the connection are minimized with the new proposed geometry.
- Uncertainties and undesirable local effects are avoided.

All this is translated in either, i) less need of reinforcements at horizontal connection flange and above all, an important improvement of fatigue life in concrete, making it possible to reduce the concrete quality around 10-15 MPa (e.g., from C80 to C65) or ii) alternatively, a reduction in the thickness of the walls while keeping the same concrete quality, decreasing in this way the amount of concrete and achieving lighter tower sections, easier to lift with cranes, or even iii) a combination of both i) and ii).

Preferably, in use, the load path intended to be transmitted along the central area is coincident with a load path intended to be transmitted along the at least one connection area.

Preferably, in use, the load path intended to be transmitted along the at least one connection area is substantially straight. More preferably, the load path intended to be transmitted along the concrete segment is substantially straight.

Optionally, the second wall thickness at the upper end of the concrete segment is between 100% and 225% of the second wall thickness at the lower end of the concrete segment, more preferably between 100% and 125%.

Optionally, the inward thickness increase is bigger than or equal to the outward thickness increase.

Preferably, the inward thickness increase is bigger than the outward thickness increase at least in a part of the at least one connection area.

Also preferably, the inward thickness increase is bigger than the outward thickness increase along the whole extension of the at least one connection area.

Optionally, the inward thickness increase and the outward thickness increase are symmetrical with regards to the central surface.

Optionally, the inward thickness increase and the outward thickness increase are asymmetrical with regards to the central surface.

Optionally, the inward thickness increase and/or the outward thickness increase comprises at least one oblique part (transition part) and at least one substantially vertical part, wherein the thickness increases in the at least one oblique part.

Preferably, the at least one substantially vertical part is adjacent to the horizontal connection flange.

Preferably, the at least one substantially vertical part is adjacent to the horizontal connection flange and follows a conicity of the tower (preferably a conicity slope between 0.5°-3° with a vertical plane).

Preferably, the oblique part comprises an oblique part slope, wherein the oblique part slope is between 75° and 90° with a horizontal plane.

Preferably, the ratio between the first wall thickness and the second wall thickness is between 25% and 70%.

Optionally, the at least one connection area comprises a height, and the concrete segment comprises a height, wherein the height of the at least one connection area is between 5% and 30% of the height of the concrete segment.

Preferably, the oblique part comprises a height, wherein the height of the oblique part is between 30% and 90% of the height of the at least one connection area.

Optionally, the concrete segment comprises just one connection area comprising a second wall thickness bigger than the first thickness, and is located in an upper end of the segment.

Optionally, the concrete segment comprises two connection areas, one of them disposed in an upper end of the concrete segment and the other disposed in a lower end of the concrete segment comprising a second wall thickness bigger than the first wall thickness. Preferably, the second wall thickness at the upper end of the concrete segment is between 100% and 225% of the second wall thickness at the lower end of the concrete segment, more preferably between 100% and 125%.

The invention also relates to a section comprising at least two concrete segments as described above.

The invention also relates to a set comprising at least two adjacent sections, being an upper section and a lower section, and a substantially horizontal joint disposed between the two adjacent sections, wherein the at least one connection area of the at least two concrete segments of the upper section is disposed in a lower end of the concrete segments and the at least one connection area of the at least two concrete segments of the lower section is disposed in an upper end of the concrete segments.

Optionally, the at least one connection area of the at least two concrete segments of the lower section comprises an outward thickness increase towards the outside of the wind turbine tower being substantially equal to the outward thickness increase towards the outside of the wind turbine tower of the at least one connection area of the at least two concrete segments of the upper section.

Preferably, the at least one connection area of the at least two concrete segments of the lower section comprises the inward thickness increase towards the inside of the wind turbine tower being bigger than the inward thickness increase towards the inside of the wind turbine tower of the at least one connection area of the at least two concrete segments of the upper section.

Preferably, the at least one connection area of the at least two concrete segments of the lower section comprises the inward thickness increase towards the inside of the wind turbine tower being equal to the inward thickness increase towards the inside of the wind turbine tower of the at least one connection area of the at least two concrete segments of the upper section.

The invention also relates to a tower comprising at least one set as described above.

Preferably, the tower comprises at least two sets as described above, an upper set and a lower set, wherein the outward thickness increase of the second wall thickness of the at least one connection area of the upper set is bigger than the outward thickness increase of the second wall thickness of the at least one connection area of the lower set.

Preferably, the tower comprises at least two sets as described above, an upper set and a lower set, each one of them comprising an upper section and a lower section, wherein the first thickness of the central area of the upper section and the lower section of the lower set is constant, and the first thickness of the central area of the at least one of the upper section and the lower section of the upper set comprises an increasing thickness with the height. In particular, the first thickness of the central area of the upper sections and the lower sections of the lower set are equal.

Preferably, the first wall thickness of the lower section is smaller than the first wall thickness of the upper section, and the second wall thickness of a lower section is smaller than the second wall thickness of the upper section, for at least one of the two sets described above.

Preferably, the first wall thickness of the central area of the upper section and the lower section of the lower set are equal and the second wall thickness of the at least one connection area of the upper section and the lower section of the lower set are equal.

The invention also relates to a wind turbine comprising a tower as described above.

The invention also relates to a mould configured to cast a concrete segment as described above, wherein the mould comprises a base, a counter-mould and two lateral sides, wherein the base comprises:
- a central surface comprising an exterior diameter, and a first end and a second end; and
- at least one connection surface disposed adjacent to one lateral side; and
wherein the counter-mould comprises:
- a central surface comprising an interior diameter, and a first end and a second end opposite to the first end and the second end of the central surface of the base, respectively; and
- at least one connection surface disposed adjacent to the one lateral side,
wherein the difference between the exterior diameter of the central surface of the base and the interior diameter of the central surface of the counter-mould increases from the first ends to the second ends.

Optionally, the at least one connection surface of the base comprises an exterior diameter greater than exterior diameter of the central surface.

The invention also relates to a method of assembling a wind turbine comprising at least a step of assembling a set as described above comprising the steps of:
- raising a lower section;
- raising the upper section onto the lower section;
- performing the horizontal joint disposed between the lower section and the upper section.

### DESCRIPTION OF THE FIGURES

To complement the description being made and for the sake of a better understanding of the characteristics of the invention according to a preferred practical embodiment thereof, attached as an integral part of said description are a set of drawings wherein, for the purpose of illustration and not limiting the scope of the invention, the following is shown:

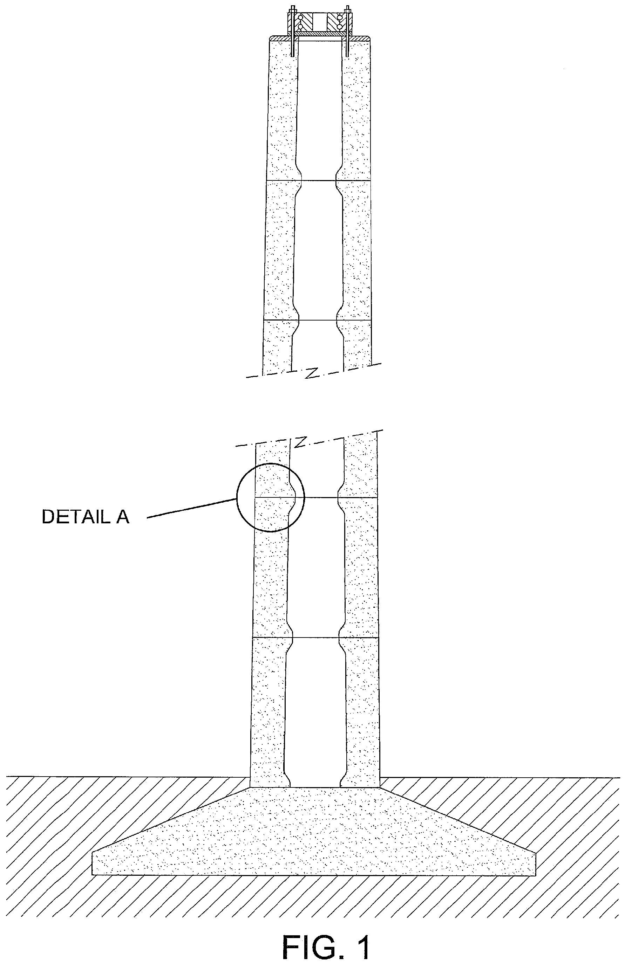

Figure 1 shows a concrete tower of a wind turbine comprising at least two concrete sections, wherein each one of the concrete sections comprises at least one concrete segment according to the state of the art.
Figure 2 shows a detail A of Figure 1, wherein the eccentricity, e, of the load path for two concrete adjacent sections is shown.
Figure 3 shows a concrete segment according to the invention.

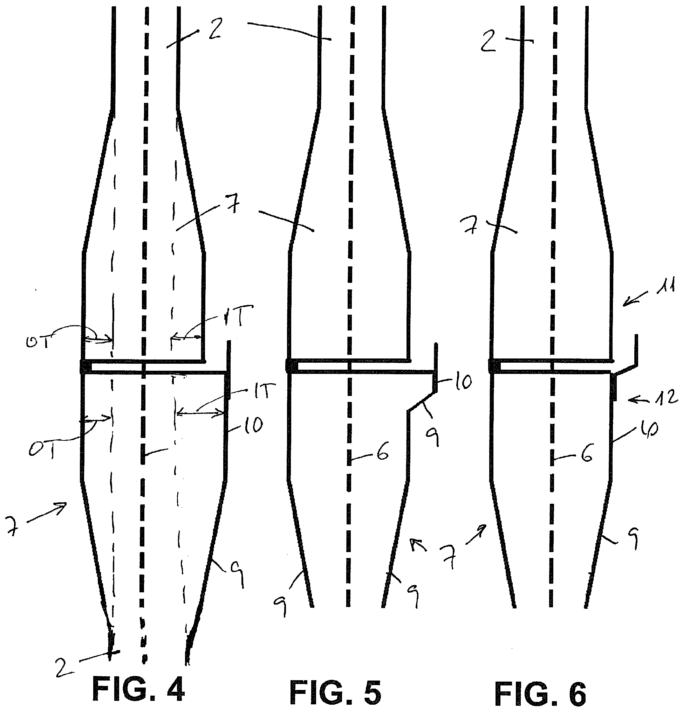

Figure 4 shows an upper concrete segment of an upper section and a lower concrete segment of a lower section according to a first preferred embodiment.
Figure 5 shows an upper concrete segment of an upper section and a lower concrete segment of a lower section according to a second preferred embodiment.
Figure 6 shows an upper concrete segment of an upper section and a lower concrete segment of a lower section according to a third preferred embodiment.

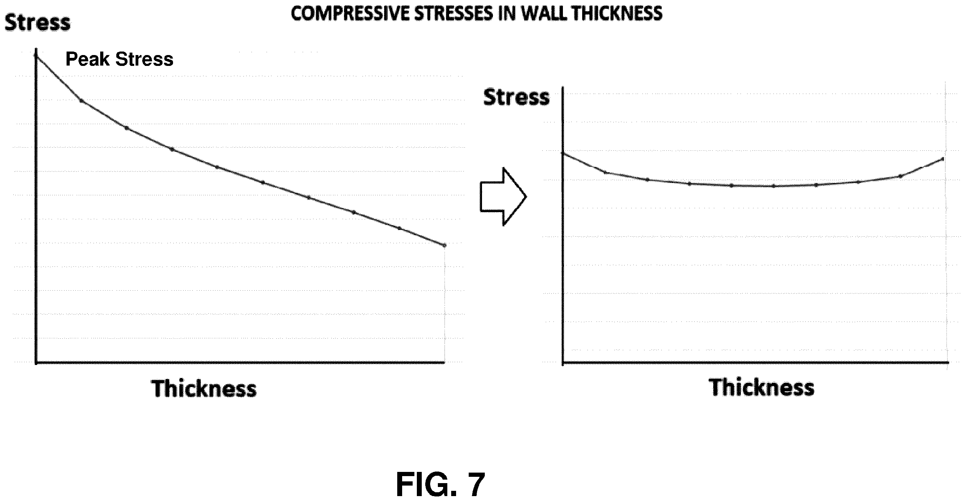

Figure 7 shows the compressive stresses in wall thickness of the concrete segment according to a concrete segment of the state of the art (left side) and according to the invention (right side).

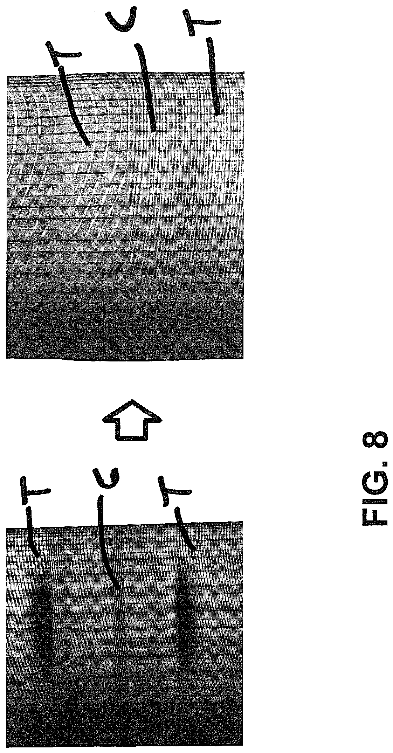

Figure 8 shows the circumferential stresses in an upper concrete segment of an upper section and a lower concrete segment of a lower section according to the state of the art (left side) and according to the invention (right side).

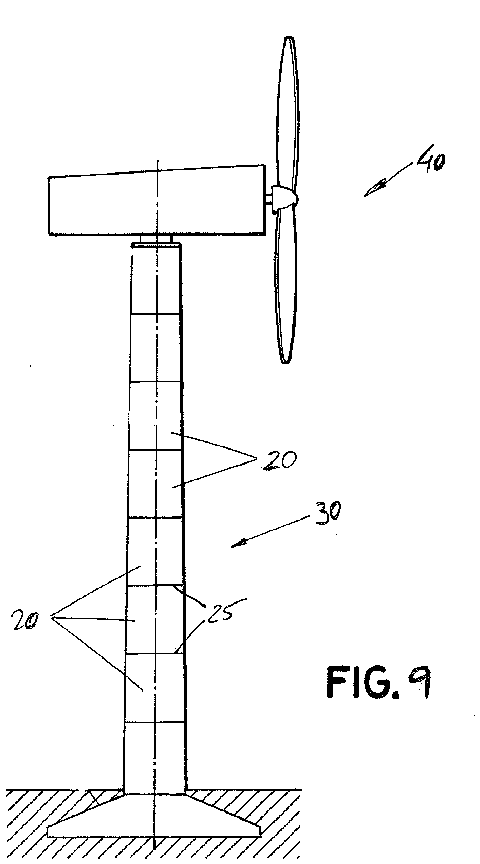

Figure 9 shows a wind turbine according to another aspect of the invention.

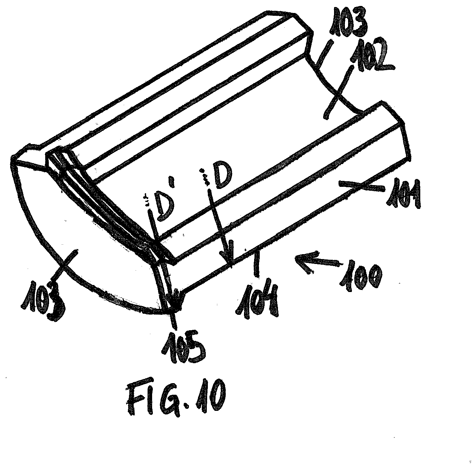

Figure 10 shows a mould according to another aspect of the present invention.

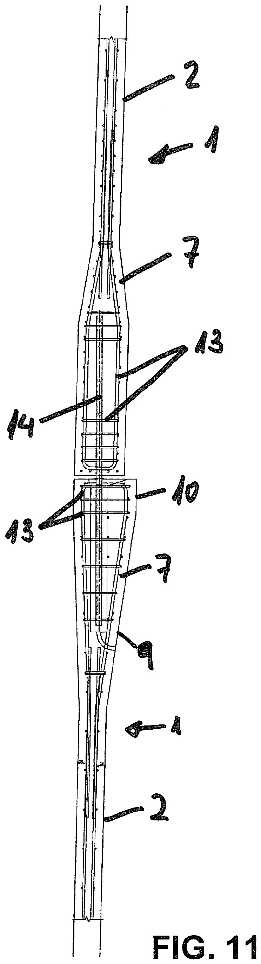

Figure 11 shows an upper concrete segment of an upper section and a lower concrete segment of a lower section according to the invention wherein the interior framework of each segment is shown.

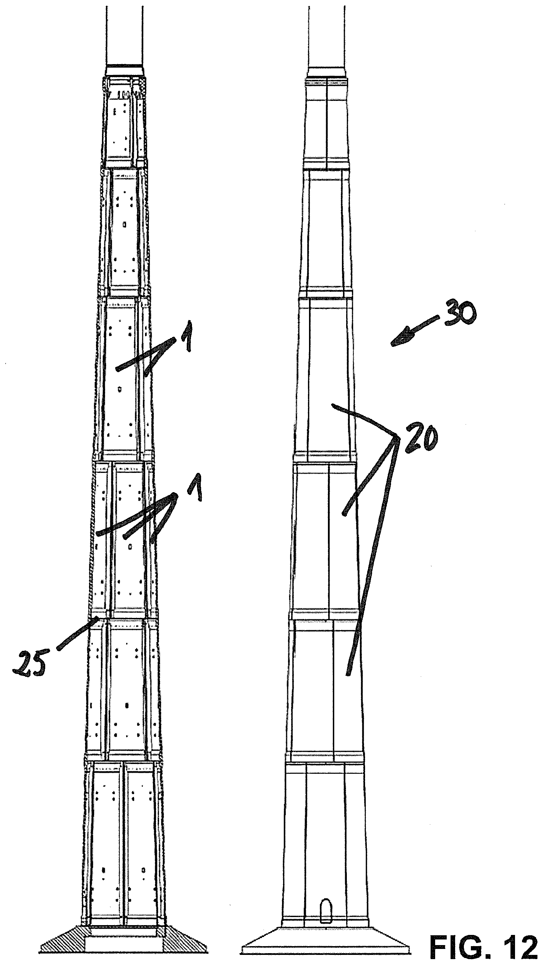

Figure 12 shows on the left side a cross-section according to a vertical plane of a tower comprising at least one set comprising at least two adjacent sections according to the invention, and on the right side, said tower according to the invention.
Figure 13 shows three embodiments of a concrete segment according to the invention.
Figure 14 shows a mould according to another aspect of the present invention.
Figure 15 shows an embodiment of a concrete segment according to the invention, wherein the horizontal connection flange of the lower connection area comprises a wall thickness being smaller than the first wall thickness of the central area of the concrete segment.

### PREFERRED EMBODIMENT OF THE INVENTION

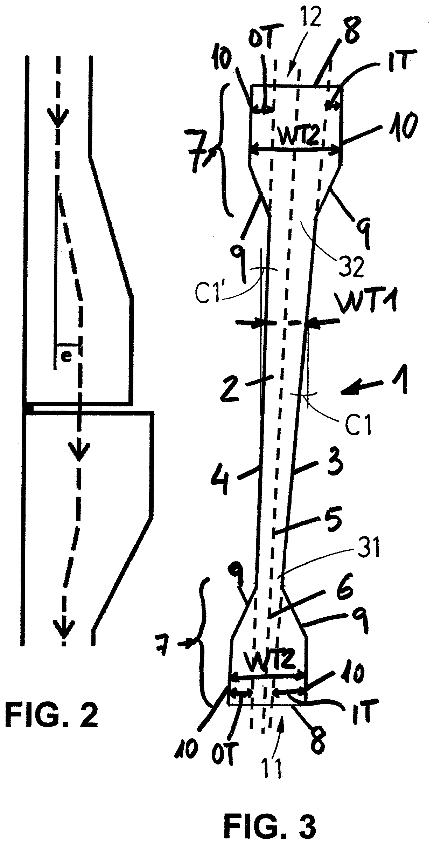

The following is a detailed description of the concrete segment (1) of a section (20) of a wind turbine tower (30), shown in Figure 3, wherein the concrete segment (1) comprises:
- a central area (2) comprising an inner surface (3), an outer surface (4) and a central surface (5) located at the same distance from the inner surface (3) as from the outer surface (4), a lower part (31) and an upper part (32), wherein the central area (2) further comprises a first wall thickness (WT1) defined as the distance between the inner surface (3) and the outer surface (4); and
- at least one connection area (7) comprising a horizontal connection flange (8), wherein the at least one connection area (7) is configured to be connected, in use, to an adjacent connection area (7) of an adjacent concrete segment (1), the adjacent connection area (7) comprising an adjacent horizontal connection flange (8), by means of the horizontal connection flange (8);
wherein the first wall thickness (WT1) in the lower part (31) of the central area (2) is smaller than the first wall thickness (WT1) in the upper part (32) of the central area (2).

Optionally, the first wall thickness (WT1) increases from the lower part (31) to the upper part (32) of the central area (2) of the concrete segment (1).

Optionally, the at least one connection area (7) comprises a second wall thickness (WT2) being bigger than the first wall thickness (WT1), wherein the second wall thickness (WT2) comprises an inward thickness increase (IT) with respect to the first wall thickness (WT1).

Optionally, the second wall thickness (WT2) of the at least one connection area (7) further comprises an outward thickness increase (OT) with respect to the first wall thickness (WT1).

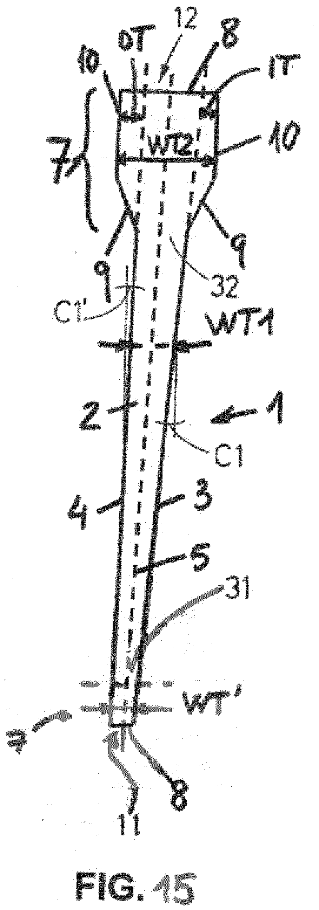

Optionally, the at least one connection area (7) is a lower connection area comprising a horizontal connection flange (8), wherein the lower connection area is configured to be connected, in use, to an adjacent connection area of a lower concrete segment (not shown in the Figures), the adjacent connection area comprising an adjacent horizontal connection flange, by means of the horizontal connection flange (8), wherein the horizontal connection flange (8) of the lower connection area comprises a wall thickness (WT') being smaller than the first wall thickness (WT1) of the central area (2) of the concrete segment (1), as shown in Figure 15.

Optionally, the first wall thickness (WT1) at the upper part (32) of the central area (2) is greater than 100% and lower than 200% of the first wall thickness (WT1) at the lower part (31) of the central area (2).

Optionally, the first wall thickness (WT1) at the upper part (32) of the central area (2) is greater than 125% and lower than 175% of the first wall thickness (WT1) at the lower part (31) of the central area (2).

Optionally, the first wall thickness (WT1) at the upper part (32) of the central area (2) is greater than 140% and lower than 160% of the first wall thickness (WT1) at the lower part (31) of the central area (2).

Optionally, the first wall thickness (WT1) increases in a uniform way from the lower part (31) to the upper part (32) of the central area (2) of the concrete segment (1).

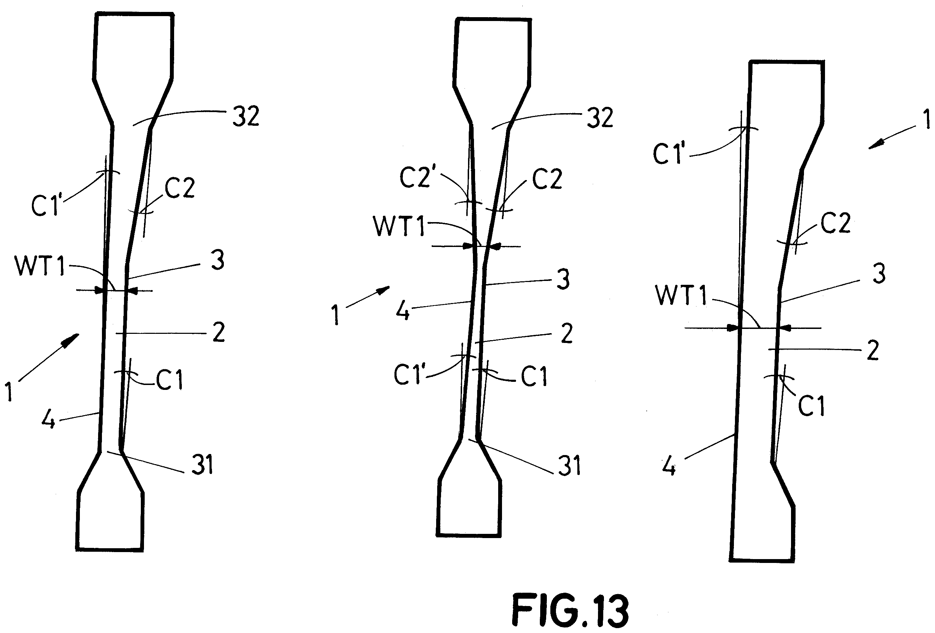

Optionally, wherein the first wall thickness (WT1) increases in a non-uniform way from the lower part (31) to the upper part (32) of the central area (2) of the concrete segment (1), as shown in the embodiments of Figure 13.

Optionally, the inner surface (3) of the central area (2) comprises at least one first conicity (C1) and the outer surface (4) of the central area (2) comprises at least one first conicity (C1'), wherein the first conicity (C1) of the inner surface (3) is greater, at least partially, than the first conicity (C1') of the outer surface (4).

Optionally, the inner surface (3) of the central area (2) comprises at least one first conicity (C1) and the outer surface (4) of the central area (2) comprises at least one first conicity (C1'), wherein the first conicity (C1) of the inner surface (3) is smaller, at least partially, than the first conicity (C1') of the outer surface (4).

Optionally, the inner surface (3) of the central area (2) comprises at least one first conicity (C1) and the outer surface (4) of the central area (2) comprises at least one first conicity (C1'), wherein the first conicity (C1) of the inner surface (3) is equal, at least partially, to the first conicity (C1') of the outer surface (4).

As shown in the embodiments of Figure 13, the inner surface (3) of the central area (2) comprises at least one second conicity (C2) and/or the outer surface (4) of the central area (2) comprises at least one second conicity (C2'), wherein the second conicity (C2) of the inner surface (3) and/or the second conicity (C2') of the outer surface (4) are/is equal, smaller or greater, at least partially, than the second conicity (C2') of the outer surface (4) and/or the second conicity (C2) of the inner surface (3), respectively, or equal, smaller or greater, at least partially, than the first conicity (C1') of the outer surface (4) and/or the first conicity (C1) of the inner surface (3).

Optionally, the at least one connection area (7) is located in an upper end (12) and/or in a lower end (11) of the segment (1).

Optionally, the concrete segment (1) further comprises an upper end (12) and a lower end (11), wherein the thickness increases, at least partially, from the lower end (11) to the upper end (12).

The invention also relates to a section (20) comprising at least two concrete segments (1) as described above.

The invention also relates to a tower (30) comprising at least two sections (20) as described above.

Optionally, the tower (30) comprises at least two adjacent sections (20) being an upper section and a lower section, and a substantially horizontal joint (25) disposed between the two adjacent sections (20), wherein the first wall thickness (WT1) of the at least two concrete segments (1) of the lower section is smaller than the first wall thickness (WT1) of the at least two concrete segments (1) of the upper section.

The invention also relates to a wind turbine (40) comprising the tower (30) as described above.

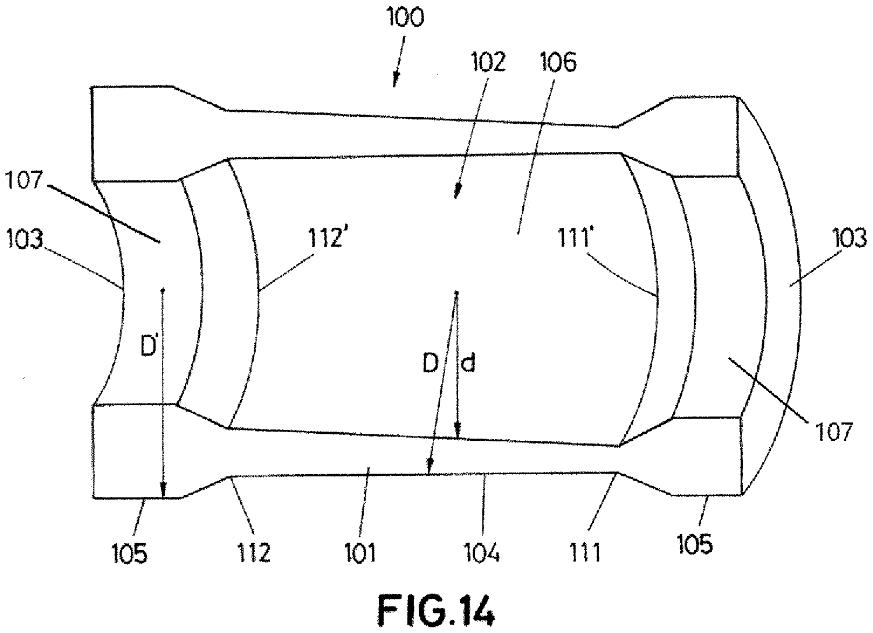

The invention also relates to a mould (100) shown in Figure 14, wherein the mould (100) is configured to cast a concrete segment as described above, wherein the mould (100) comprises at least a base (101), a counter-mould (102) and two lateral sides (103),
wherein the base (101) comprises:
- a central surface (104) comprising an exterior diameter (D), and a first end (111) and a second end (112); and

- at least one connection surface (105) disposed adjacent to one lateral side (103); and wherein the counter-mould (102) comprises
   - a central surface (106) comprising an interior diameter (d), and a first end (111') and a second end (112') opposite to the first end (111) and the second end (112) of the central surface (104) of the base (101), respectively; and
   - at least one connection surface (107) disposed adjacent to the one lateral side (103),
   wherein the difference between the exterior diameter (D) of the central surface (104) of the base (101) and the interior diameter (d) of the central surface (106) of the counter-mould (102) increases from the first ends (111, 111') to the second ends (112, 112'), as shown in Figure 14.

Optionally, the at least one connection surface (105) of the base comprises an exterior diameter (D') greater than exterior diameter (D) of the central surface (104).

## Claims

1. Concrete segment (1) of a section (20) of a wind turbine tower (30), wherein the concrete segment (1) comprises:
- a central area (2) comprising an inner surface (3), an outer surface (4) and a central surface (5) located at the same distance from the inner surface (3) as from the outer surface (4), a lower part (31) and an upper part (32), wherein the central area (2) further comprises a first wall thickness (WT1) defined as the distance between the inner surface (3) and the outer surface (4); and
- at least one connection area (7) comprising a horizontal connection flange (8), wherein the at least one connection area (7) is configured to be connected, in use, to an adjacent connection area (7) of an adjacent concrete segment (1), the adjacent connection area (7) comprising an adjacent horizontal connection flange (8), by means of the horizontal connection flange (8);
**characterised in that** the first wall thickness (WT1) in the lower part (31) of the central area (2) is smaller than the first wall thickness (WT1) in the upper part (32) of the central area (2).

2. The concrete segment (1) of claim 1, wherein the at least one connection area (7) comprises a second wall thickness (WT2) being bigger than the first wall thickness (WT1), the second wall thickness (WT2) comprising an inward thickness increase (IT) with respect to the first wall thickness (WT1);

3. The concrete segment (1) of claim 2, wherein the second wall thickness (WT2) of the at least one connection area (7) further comprises an outward thickness increase (OT) with respect to the first wall thickness (WT1).

4. The concrete segment (1) of any of preceding claims, wherein the first wall thickness (WT1) at the upper part (32) of the central area (2) is greater than 100% and lower than 200% of the first wall thickness (WT1) at the lower part (31) of the central area (2), preferably the first wall thickness (WT1) at the upper part (32) of the central area (2) is greater than 125% and lower than 175% of the first wall thickness (WT1) at the lower part (31) of the central area (2), and more preferably the first wall thickness (WT1) at the upper part (32) of the central area (2) is greater than 140% and lower than 160% of the first wall thickness (WT1) at the lower part (31) of the central area (2).

5. The concrete segment (1) of any of preceding claims, wherein the first wall thickness (WT1) increases in a uniform or in a non-uniform way from the lower part (31) to the upper part (32) of the central area (2) of the concrete segment (1).

6. The concrete segment (1) of any of preceding claims, wherein the inner surface (3) of the central area (2) comprises at least one first conicity (C1) and the outer surface (4) of the central area (2) comprises at least one first conicity (C1'), wherein the first conicity (C1) of the inner surface (3) is greater, at least partially, than the first conicity (C1') of the outer surface (4).

7. The concrete segment (1) of any of claims 1 to 5, wherein the inner surface (3) of the central area (2) comprises at least one first conicity (C1) and the outer surface (4) of the central area (2) comprises at least one first conicity (C1'), wherein the first conicity (C1) of the inner surface (3) is smaller, at least partially, than the first conicity (C1') of the outer surface (4).

8. The concrete segment (1) of any claims 1 to 5, wherein the inner surface (3) of the central area (2) comprises at least one first conicity (C1) and the outer surface (4) of the central area (2) comprises at least one first conicity (C1'), wherein the first conicity (C1) of the inner surface (3) is equal, at least partially, to the first conicity (C1') of the outer surface (4).

9. The concrete segment (1) of any claims 6 to 8, wherein the inner surface (3) of the central area (2) comprises at least one second conicity (C2) and/or the outer surface (4) of the central area (2) comprises at least one second conicity (C2'), wherein the second conicity (C2) of the inner surface (3) and/or the second conicity (C2') of the outer surface (4) are/is equal, smaller or greater, at least partially, than the second conicity (C2') of the outer surface (4) and/or the second conicity (C2) of the inner surface (3), respectively, or equal, smaller or greater, at least partially, than the first conicity (C1') of the outer surface (4) and/or the first conicity (C1) of the inner surface (3).

10. The concrete segment (1) of any of preceding claims comprising an upper end (12) and a lower end (11), wherein the thickness increases, at least partially, from the lower end (11) to the upper end (12), and wherein the at least one connection area (7) is located in the upper end (12) and/or in the lower end (11) of the segment (1).

11. The concrete segment (1) of any of preceding claims wherein the first wall thickness (WT1) increases from the lower part (31) to the upper part (32) of the central area (2) of the concrete segment (1).

12. Section (20) comprising at least two concrete segments (1) of any of claims 1 to 11.

13. Tower (30) comprising at least two sections (20) of claim 12.

14. The tower (30) of claim 13 comprising at least two adjacent sections (20) being an upper section and a lower section, and a substantially horizontal joint (25) disposed between the two adjacent sections (20), wherein the first wall thickness (WT1) of the at least two concrete segments (1) of the lower section is smaller than the first wall thickness (WT1) of the at least two concrete segments (1) of the upper section.

15. Wind turbine (40) comprising the tower (30) of any of the claims 13 or 14.

16. Mould (100) configured to cast a concrete segment of any of the claims 1 to 11, wherein the mould (100) comprises at least a base (101), a counter-mould (102) and two lateral sides (103),
wherein the base (101) comprises:
- a central surface (104) comprising an exterior diameter (D), and a first end (111) and a second end (112); and
- at least one connection surface (105) disposed adjacent to one lateral side (103); and
wherein the counter-mould (102) comprises:
- a central surface (106) comprising an interior diameter (d), and a first end (111') and a second end (112') opposite to the first end (111) and the second end (112) of the central surface (104) of the base (101), respectively; and
- at least one connection surface (107) disposed adjacent to the one lateral side (103),
wherein the difference between the exterior diameter (D) of the central surface (104) of the base (101) and the interior diameter (d) of the central surface (106) of the counter-mould (102) increases from the first ends (111, 111') to the second ends (112, 112').
